# EUROPEAN PATENT APPLICATION

(11) **EP 4 745 181 A1**
(43) Date of publication of application: **20.05.2026**
(21) Application number: 24839779.6
(22) Date of filing: 10.07.2024
(51) Int. Cl.: C08G 77/20, C08F 290/06

(54) **POLYMERIZABLE CARBOSILOXANE DENDRON AND POLYMER COMPOUND CONTAINING POLYMERIZABLE CARBOSILOXANE DENDRON AS CONSTITUENT COMPONENT**

(30) Priority: 13.07.2023 JP 2023114846
(71) Applicant: Seed Co., Ltd., Tokyo 113-8402 (JP)
(72) Inventor: ITO, Yuki, Tokyo 113-8402 (JP); YAMAZAKI, Yoshiko, Tokyo 113-8402 (JP)
(74) Representative: Schulz Junghans Patentanwälte PartGmbB
(86) International application number: PCT/JP2024/024900
(87) International publication number: WO 2025/013889

(57) **Abstract**

The objective of the present invention is to provide a polymerizable carbosiloxane dendron, having excellent compatibility and copolymerizability with a hydrophilic compound capable of copolymerization, thereby expected to improve versatility in functional materials.

The objective is solved by a polymerizable carbosiloxane dendron, represented by the general formula (1): X-L-D, wherein in the general formula (1), X is a (meth)acryloyloxyalkyl residue, L is a dicarbonyl residue, and D is a carbosiloxane dendron.

## Description

### Technical Field

The present invention relates to a novel polymerizable carbosiloxane dendron and a polymer compound containing the carbosiloxane dendron as constituent component. More specifically, the polymerizable carbosiloxane dendron is a novel polymerizable carbosiloxane dendron having a dicarbonyl residue between a polymerizable functional group and a dendron structure.

### Background Art

A dendrimer has a structure in which a central core gives rise to a highly branched architecture extending radially outward, and the number of branching points increases from the core to the surface. Dendrimers have characteristic properties, such as low viscosity, high reactivity, high solubility, and low glass transition temperature, and thus have attracted attention in their applications.

A dendron is a wedge-shaped segment of a monodisperse dendrimer, having a structure that contains multiple terminal groups and one highly reactive functional group located at the central part. Also, dendrons have attracted attention in their applications as well as dendrimers.

Known organosilicon dendrimers or organosilicon dendrons include, for example, a carbosiloxane having a polysiloxane structure as its core and a highly branched architecture with alternating siloxane and silalkylene bonds (See, for example, Patent Document 1), and a carbosiloxane having a polymerizable functional group in the molecule (See, for example, Patent Document 2).

### Citation List

### Patent Documents

Patent Document 1: JP 2000-072784 A
Patent Document 2: JP 2001-040093 A

### Summary of the Invention

### Problems to be Solved by the Invention

Although the carbosiloxane in Patent Document 1 has a dendrimer structure, it has no polymerizable functional groups in the molecule and thus has no copolymerizability with one or more other compounds capable of copolymerization (polymerizable monomers). In addition, although the carbosiloxane in Patent Document 2 has a dendron structure and a polymerizable functional group in the molecule, it has no hydrophilic groups and thus has poor compatibility with one or more other hydrophilic compounds capable of copolymerization (hydrophilic monomers).

Therefore, when forming a polymer compound, particularly hydrogel, containing a carbosiloxane dendron as constituent component, the carbosiloxane dendrimer disclosed in Patent Document 1 has a problem that it cannot act as constituent component since it has no polymerizable functional groups. Also, the carbosiloxane dendron disclosed in the Patent Document 2 has a problem that it has poor compatibility with hydrophilic monomers, and therefore the obtained monomer mixture is not homogeneous and fails to copolymerize sufficiently. As a result, a hydrogel cannot be formed. Even when it does form, it may exhibit white turbidity and/or other undesirable features. Therefore, the range of polymerizable monomers applicable as constituent component of the polymer compound is limited. Consequently, their range of applications as functional material compositions is limited, reducing their versatility.

In view of the above circumstances, it is an objective of the present invention to provide a novel polymerizable carbosiloxane dendron having excellent compatibility and copolymerizability with a hydrophilic compound capable of copolymerization, thereby expected to improve versatility in functional materials; and a polymer compound, particularly hydrogel, containing the polymerizable carbosiloxane dendron as constituent component.

### Means of Solving the Problems

In the course of their diligent study to solve the above problem, the inventors focused on a linker structure that connects a polymerizable functional group and a dendron structure in the molecule. The present inventors thought that introducing a polar group into the linker structure might improve compatibility and copolymerizability between compounds when obtaining a polymer compound containing a polymerizable carbosiloxane dendron and one or more other compounds capable of copolymerization as constituent component.

Through repeated trial and error in research and development based on the above ideas, the present inventors surprisingly found that a polymerizable carbosiloxane dendron having a dicarbonyl residue as a polar group in the molecule has excellent compatibility and copolymerizability with one or more other compounds capable of copolymerization. More surprisingly, the present inventors found that using such a polymerizable carbosiloxane dendron improves compatibility and copolymerizability with one or more hydrophilic compounds capable of copolymerization. The present inventors have thus succeeded in inventing a polymer compound capable of forming a favorable transparent hydrogel.

As such, the present invention has been completed on the basis of the findings and successful examples.

According to the present invention, the following aspects are provided:
[1] A polymerizable carbosiloxane dendron, represented by the general formula (1): X-L-D (wherein, X is a (meth)acryloyloxyalkyl residue represented by the following general formula (2), 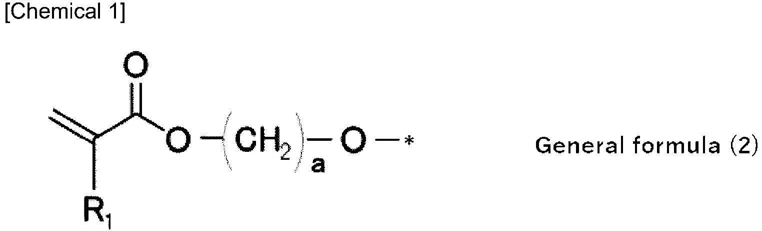
   (wherein, R₁ represents a hydrogen atom or a methyl group, and the symbol "a" is an integer of 1 to 4, and the asterisk * is a bonding site between the general formula (2) and the following general formula (3))
   L is a dicarbonyl residue represented by the following general formula (3), and 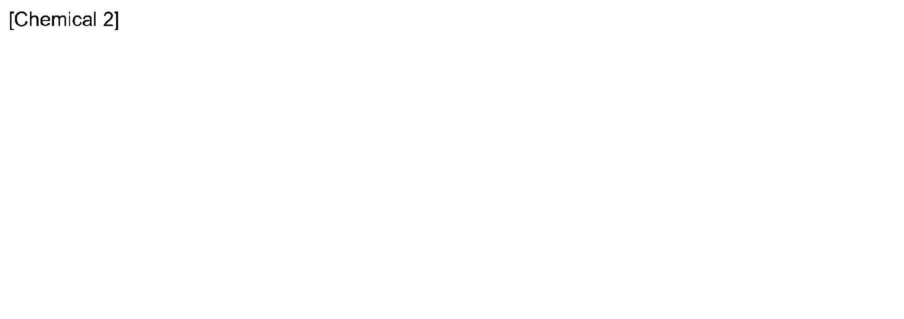 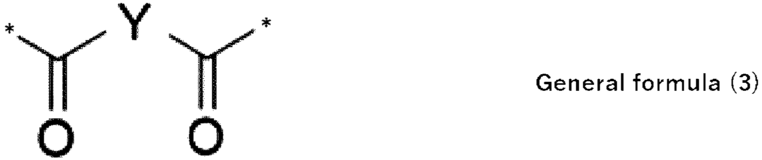
   (wherein, Y represents an alkylene group having 1 to 8 carbons or a phenylene group, one of the asterisks * is a bonding site between the general formula (3) and the above general formula (2), and the other of the asterisks * is a bonding site between the general formula (3) and the following general formula (4) or the following general formula (7))
   D is a carbosiloxane dendron represented by the following general formula (4), 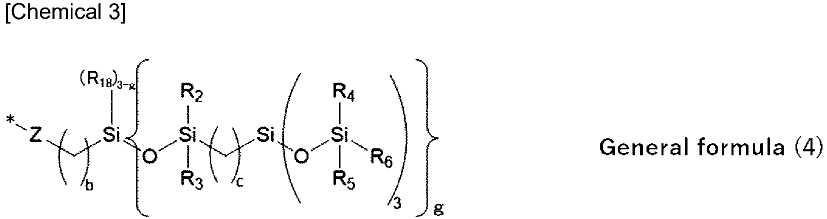
   (wherein, Z represents O or NH, the symbol "b" is an integer of 1 to 5, the symbol "c" is an integer of 2 to 5, R₂ to R₅ each independently represents an alkyl group having 1 to 4 carbons, R₆ represents an alkyl group having 1 to 4 carbons or an substituted alkyl group represented by the following general formula (5), the symbol "g" is an integer of 2 to 3, and R₁₈ represents a methyl group, and the asterisk * is a bonding site between the general formula (4) and the above general formula (3)) 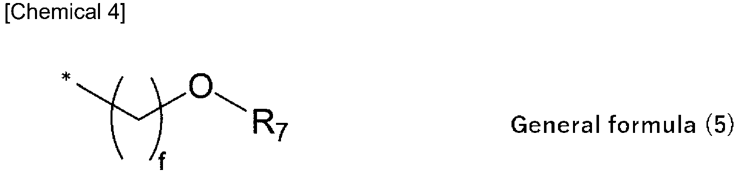
   (wherein, the symbol "f" is an integer of 2 to 5, and R₇ represents a hydrogen atom, or an alkyl group or a hydroxyalkyl group with a linear or branched structure having 1 to 5 carbons, or a silyl group represented by the following general formula (6), and the asterisk * is a bonding site between the general formula (5) and the above general formula (4)) 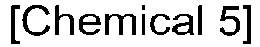 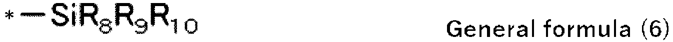
   (wherein, R₈ to R₁₀ each independently represents a hydrogen atom or an alkyl group having 1 to 3 carbons, and the asterisk * is a bonding site between the general formula (6) and the above general formula (5)), or
   D is a carbosiloxane dendron represented by the following general formula (7) 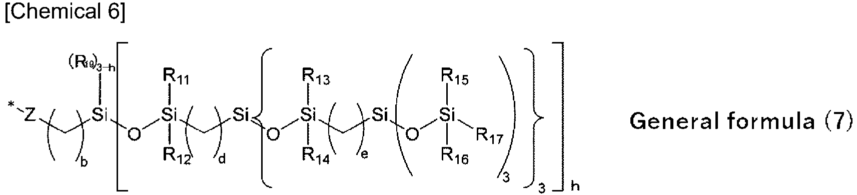
   (wherein, Z represents O or NH, the symbol "b" is an integer of 1 to 5, the symbols "d" and "e" each is independently an integer of 2 to 5, R₁₁ to R₁₆ each independently represents an alkyl group having 1 to 4 carbons, R₁₇ represents an alkyl group having 1 to 4 carbons or a substituted alkyl group represented by the above general formula (5), the symbol "h" is an integer of 2 to 3, and R₁₉ represents a methyl group, and the asterisk * is a bonding site between the general formula (7) and the above general formula (3))).
[2] The polymerizable carbosiloxane dendron according to item [1], wherein in the general formula (2), R₁ is methyl group, and the symbol "a" is an integer of 2.
[3] The polymerizable carbosiloxane dendron according to item [1], wherein in the general formula (3), Y is an alkylene group having 2 carbons.
[4] The polymerizable carbosiloxane dendron according to item [1], wherein in the general formula (4), R₂ to R₅ each is methyl group.
[5] The polymerizable carbosiloxane dendron according to item [4], wherein in the general formula (4), R₆ is methyl group or ethyl group.
[6] The polymerizable carbosiloxane dendron of item [4], wherein in the general formula (4), the symbol "b" is an integer of 3, the symbol "c" is an integer of 2, and the symbol "g" is an integer of 2 to 3.
[7] The polymerizable carbosiloxane dendron according to item [1], wherein in the general formula (7), R₁₁ to R₁₆ each is methyl group.
[8] The polymerizable carbosiloxane dendron according to item [7], wherein in the general formula (7), R₁₇ is methyl group or ethyl group.
[9] The polymerizable carbosiloxane dendron according to item [7], wherein in the general formula (7), the symbol "b" is an integer of 3, the symbol "d" is an integer of 2, the symbol "e" is an integer of 3, and the symbol "h" is an integer of 2 to 3.
[10] The polymerizable carbosiloxane dendron according to item [1], wherein in the general formula (6), R₈ to R₁₀ each is methyl group or ethyl group.
[11] The polymerizable carbosiloxane dendron according to item [1], wherein the polymerizable carbosiloxane dendron is represented by any one of the following formulas: 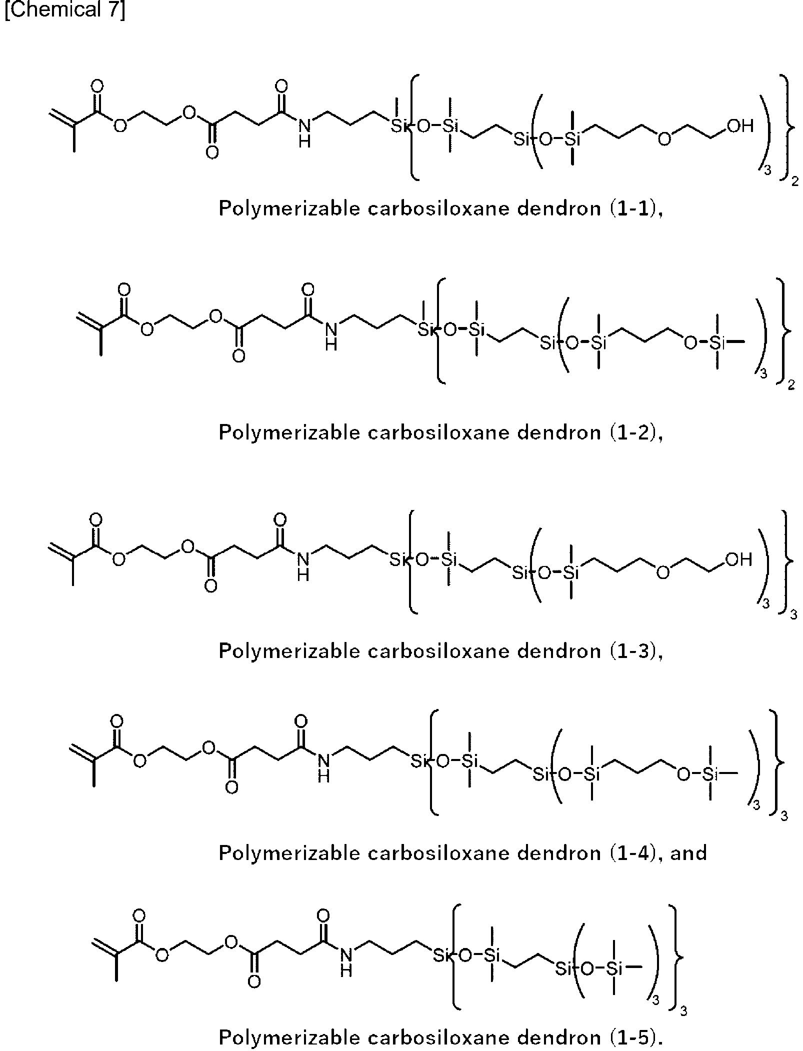
[12] A polymer compound, containing as constituent components: a polymerizable carbosiloxane dendron according to any one of items [1] to [11], and a compound capable of copolymerizing with the polymerizable carbosiloxane dendron.
[13] The polymer compound according to item [12], wherein the compound capable of copolymerizing with the polymerizable carbosiloxane dendron is a hydrophilic compound capable of copolymerizing with at least one polymerizable carbosiloxane dendron.

### Effects of the Invention

According to the present invention, there can be provided a novel polymerizable carbosiloxane dendron, having a dicarbonyl residue between a polymerizable functional group and a dendron structure in the molecule, thereby having excellent compatibility and copolymerizability with a hydrophilic compound capable of copolymerization, and being expected to improve versatility in functional materials. Specifically, when forming a hydrogel which is a polymer compound containing at least the polymerizable carbosiloxane dendron according to the present invention and a hydrophilic compound capable of copolymerization as constituent component, the obtained hydrogel is favorable and transparent since the polymerizable carbosiloxane dendron according to the present invention has improved compatibility and copolymerizability with a hydrophilic compound capable of copolymerization. Therefore, the range of polymerizable monomers that can be selected as constituent component of the polymer compound is expanded, thereby improving its versatility as functional material compositions. As a result, it is possible to obtain a variety of hydrogels that has both dendron-derived properties and intended hydrogel characteristics, potentially leading to new applications of hydrogels.

### Description of Embodiments

Unless otherwise specified, each term herein is used in the meaning commonly used by those skilled in the art in the chemical industry dealing with polymer compounds, hydrogels, etc., and should not be construed to have any meaning that is unduly limiting. Also, any speculations and theories herein are made on the basis of the knowledge and experiences of the present inventors and as such, the present invention is not bound by any such speculations and theories.

The term "and/or" as used herein means either any one of, any combination of two or more of, or combination of all of listed related items.

The terms "include," "comprise," and "contain" mean that an element(s) other than an element(s) as explicitly represented can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or substantially consist of an element(s) as explicitly indicated. Such elements include limitations such as components, steps, conditions, and parameters.

The wording "to" for indicating a range of values is intended to include values preceding and following the wording; for example, "0% to 100%" means a range from 0% or more and 100% or less. The terms "more than" and "less than" used herein means the lower and upper limits without including a value following the term, respectively. For example, "more than 1" means a value beyond 1, and "less than 100" means a value below 100.

The number of digits of an integer equals to its significant figure. For example, 1 has one significant figure and 10 has two significant figures. For a decimal number, the number of digits after a decimal point equals to its significant figure. For example, 0.1 has one significant figure and 0.10 has two significant figures.

While the polymerizable carbosiloxane dendron according to one embodiment of the present invention, and a polymer compound containing the polymerizable carbosiloxane dendron as constituent component will now be described in detail, the technical scope of the present invention is not limited only by the matters of this section, and may take various forms to the extent that its objective can be achieved.

The polymerizable carbosiloxane dendron according to one embodiment of the present invention is represented by the following general formula (1).

General formula (1) : X-L-D.

In the general formula (1), X is a (meth)acryloyloxyalkyl residue represented by the following general formula (2).

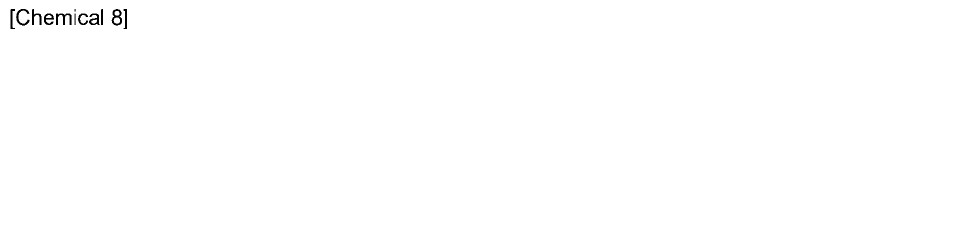

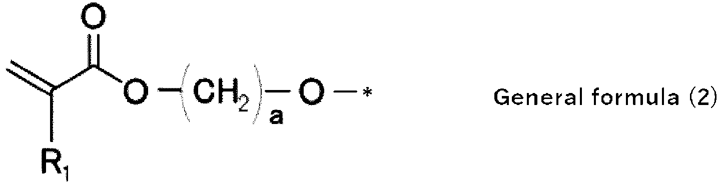

In the general formula (2), R₁ represents a hydrogen atom or a methyl group, and the symbol "a" is an integer of 1 to 4. The asterisk * is a bonding site between the general formula (2) and the following general formula (3).

The symbol "a" is an integer of 1 to 4, and the group represented by -(CH₂)ₐ- includes a linear hydrocarbon group having 1 to 4 carbons.

In the general formula (1), L is a dicarbonyl residue represented by the following general formula (3). Since the polymerizable carbosiloxane dendron according to the present invention contains the linker (L) that is a dicarbonyl residue, it has excellent compatibility and copolymerizability with a compound capable of copolymerization, particularly hydrophilic compound capable of copolymerization.

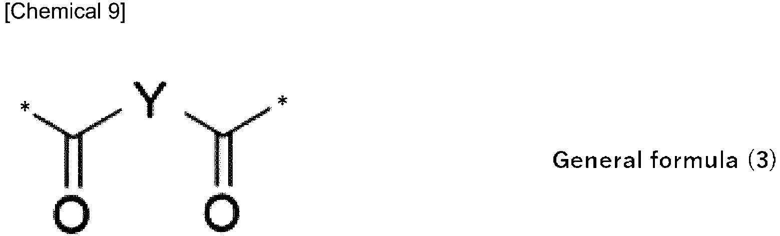

In the general formula (3), Y represents an alkylene group having 1 to 8 carbons or a phenylene group. One of the asterisks * is a bonding site between the general formula (3) and the above general formula (2), and the other of the asterisks * is a bonding site between the general formula (3) and the following general formula (4) or the following general formula (7).

Examples of L includes dicarbonyl residues from, for example, malonic acid, succinic acid, glutaric acid, adipic acid, pimelic acid, suberic acid, azelaic acid, sebacic acid, phthalic acid, isophthalic acid, and terephthalic acid. From the viewpoint of reactivity in synthesis of the polymerizable carbosiloxane dendron according to the invention, dicarbonyl residues with Y having 1 to 4 carbons from malonic acid, succinic acid, glutaric acid, and adipic acid are preferably used.

In the general formula (1), D is a carbosiloxane dendron moiety represented by the following general formula (4) or the following general formula (7).

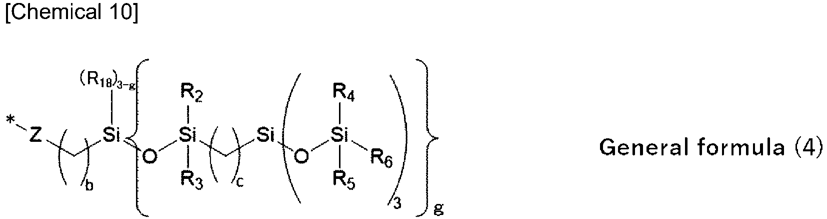

In the general formula (4), Z represents O or NH, the symbol "b" is an integer of 1 to 5, the symbol "c" is an integer of 2 to 5, R₂ to R₅ each independently represents an alkyl group having 1 to 4 carbons, R₆ represents an alkyl group having 1 to 4 carbons or an substituted alkyl group represented by the following general formula (5), the symbol "g" is an integer of 2 to 3, and R₁₈ represents a methyl group. The asterisk * is a bonding site between the general formula (4) and the above general formula (3).

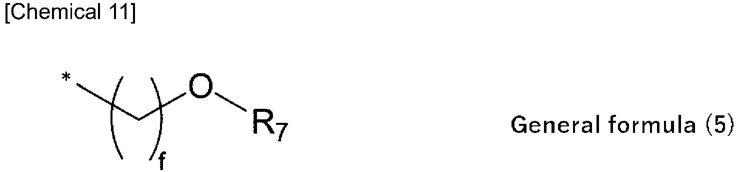

In the general formula (5), the symbol "f" is an integer of 2 to 5, and R₇ represents a hydrogen atom, or an alkyl group or a hydroxyalkyl group with a linear or branched structure having 1 to 5 carbons, or a silyl group represented by the following general formula (6). The asterisk * is a bonding site between the general formula (5) and the above general formula (4).

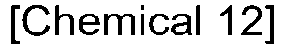

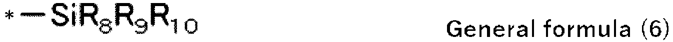

In the general formula (6), R₈ to R₁₀ each independently represents a hydrogen atom or an alkyl group having 1 to 3 carbons. The asterisk * is a bonding site between the general formula (6) and the above general formula (5).

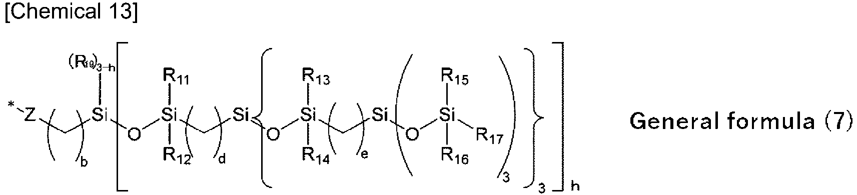

In the general formula (7), Z represents O or NH, the symbol "b" is an integer of 1 to 5, the symbols "d" and "e" each is independently an integer of 2 to 5, R₁₁ to R₁₆ each independently represents an alkyl group having 1 to 4 carbons, R₁₇ represents an alkyl group having 1 to 4 carbons or a substituted alkyl group represented by the above general formula (5), the symbol "h" is an integer of 2 to 3, and R₁₉ represents a methyl group. The asterisk * is a bonding site between the general formula (7) and the above general formula (3).

In the polymerizable carbosiloxane dendron according to the present invention, R₂ to R₅ or R₁₁ to R₁₆ may all be different substituents, or two to four of them, or two to six of them may be the same substituent.

Examples of the alkyl groups represented by R₂ to R₅ or R₁₁ to R₁₆ include saturated aliphatic hydrocarbon groups having 1 to 4 carbons such as methyl group, ethyl group, n-propyl group, isopropyl group, n-butyl group, sec-butyl group, and tert-butyl group. In the present invention, methyl group and ethyl group are more preferable since increased side-chain bulkiness may increase the molecule's hydrophobicity.

When R₆ and R₁₇ are alkyl groups, examples of them include saturated aliphatic hydrocarbon groups having 1 to 4 carbons such as methyl group, ethyl group, n-propyl group, isopropyl group, n-butyl group, sec-butyl group, and tert-butyl group. In the present invention, methyl group and ethyl group are more preferable since increased side-chain bulkiness may increase the molecule's hydrophobicity.

When R₆ and R₁₇ are represented by the general formula (5), examples of them include methoxyethyl group, ethoxyethyl group, methoxypropyl group, ethoxypropyl group, hydroxymethoxyethyl group, 2-hydroxyethoxyethyl group, 3-hydroxypropoxyethyl group, hydroxymethoxypropyl group, 2-hydroxyethoxypropyl group, 3-hydroxypropoxypropyl group, trimethylsiloxyethyl group, triethylsiloxyethyl group, trimethylsiloxypropyl group, and triethylsiloxypropyl group. In terms of compatibility with one or more other compounds capable of copolymerization and physicochemical properties of the obtained hydrogel, 2-hydroxyethoxyethyl group and trimethylsiloxyethyl group are preferable.

Examples of the alkyl groups represented by R₈ to R₁₀ include saturated aliphatic hydrocarbon groups having 1 to 3 carbons such as methyl group, ethyl group, n-propyl group, and isopropyl group. In the present invention, methyl group and ethyl group are more preferable since increased side-chain bulkiness may increase the molecule's hydrophobicity.

Examples of more specific forms of the polymerizable carbosiloxane dendron represented by the general formula (1) include, but are not limited to, polymerizable carbosiloxane dendrons (1-1) to (1-5) represented by the following formulas.

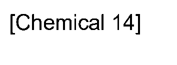

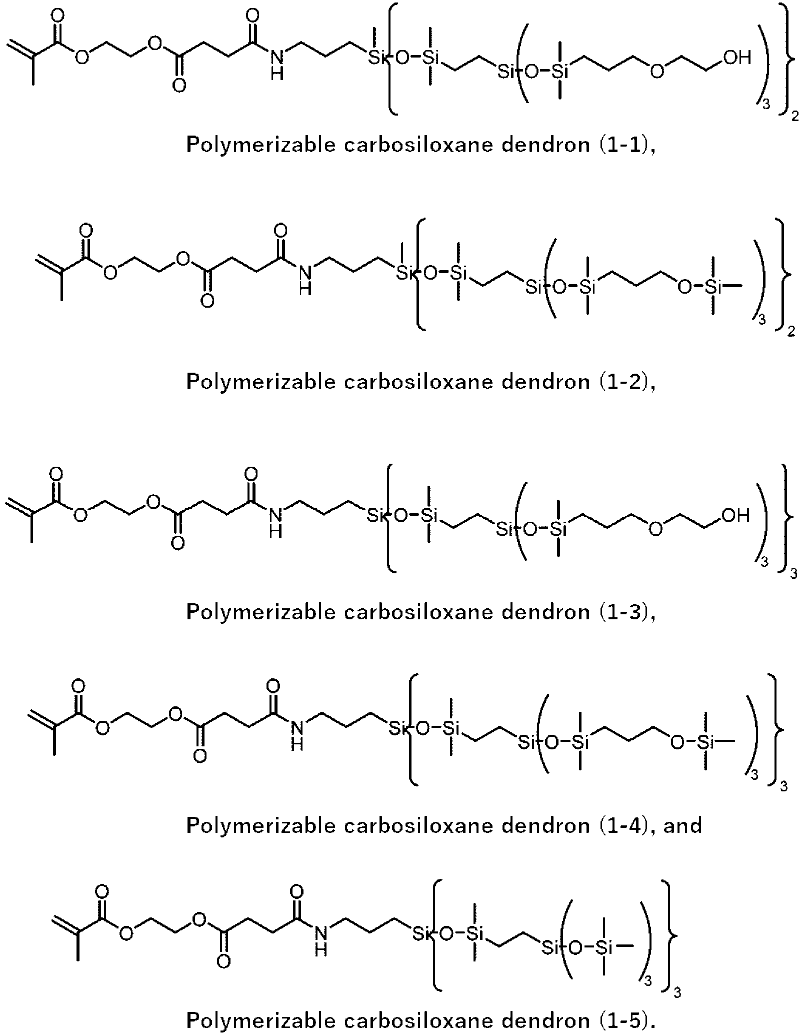

The method of producing the polymerizable carbosiloxane dendron is not particularly limited, but includes, for example, a method described in the Examples below, with or without modifications as appropriate, to obtain a desired polymerizable carbosiloxane dendron.

The polymer compound according to one embodiment of the present invention can be formed by subjecting one type of the polymerizable carbosiloxane dendron represented by the general formula (1) alone or a combination of two or more types, and a compound capable of copolymerizing with one or more types of the polymerizable carbosiloxane dendron to a copolymerization reaction.

The favorable amount of the polymerizable carbosiloxane dendron represented by the general formula (1) added, in the polymer compound according to one embodiment of the present invention, is not particularly limited, but is, for example, 0.1% by mass to 75% by mass, preferably 0.3% by mass to 70% by mass, more preferably 0.5% by mass to 65% by mass relative to the total amount of the polymer compound. When the amount of the polymerizable carbosiloxane dendron represented by the general formula (1) added is less than 0.1% by mass, the obtained polymer compound may exhibit reduced dendron structure-derived effects. When the amount of the polymerizable carbosiloxane dendron represented by the general formula (1) added exceeds 75% mass, the obtained polymer compound is unfavorable because it tends to show cloudiness and reduced strength.

The compound capable of copolymerizing with the polymerizable carbosiloxane dendron represented by the general formula (1) in the polymer compound according to one embodiment of the present invention is not particularly limited as long as it may act as a monomer component as is generally known, and for example, a hydrophilic compound capable of copolymerization may be used suitably. Since the polymerizable carbosiloxane dendron represented by the general formula (1) has a dicarbonyl residue introduced as a polar group and thus particularly has excellent compatibility and copolymerizability with a hydrophilic compound capable of copolymerization, the obtained polymer compound by using a hydrophilic compound capable of copolymerization can form a favorable transparent hydrogel. The polymer compound with such properties can be applied to a variety of applications, such as hydrogels, medical devices, ocular lenses, DDS devices, etc.

The compound capable of polymerizing with the polymerizable carbosiloxane dendron represented by the general formula (1) in the polymer compound according to one embodiment of the present invention is not particularly limited as long as it may act as a monomer component as is generally known, and for example, a hydrophilic compound may be used suitably.

The hydrophilic compound capable of copolymerizing with the polymerizable carbosiloxane dendron represented by the general formula (1) is not particularly limited as long as it may act as a hydrophilic monomer component as is generally known. Examples of the hydrophilic compound include (meth)acrylic monomers such as N,N-dimethylacrylamide, 2-hydroxyethyl methacrylate, (meth)acrylic acid, polyethylene glycol monomethacrylate, and glycerol methacrylate; and vinyl monomers such as N-vinylpyrrolidone, N-vinyl-N-methylacetamide, N-vinyl-N-ethylacetamide, N-vinyl-N-ethylformamide, and N-vinylformamide. The hydrophilic compound capable of copolymerization may be used either individually or in combination of two or more of those listed above.

The amount of the hydrophilic compound capable of copolymerizing with the polymerizable carbosiloxane dendron represented by the general formula (1) added is not particularly limited, but is, for example, 25% by mass to 99.9% by mass, preferably 30% by mass to 99.7% by mass, more preferably 35% by mass to 99.5% by mass relative to the total amount of the polymer compound. Adjusting the type and/or amount of the hydrophilic compound capable of copolymerizing with the polymerizable carbosiloxane dendron represented by the general formula (1) added enables preparation of the polymer compound, particularly hydrogel, with desired flexibility and/or water content.

In order to impart strength, shape stability and/or flexibility to the polymer compound according to one embodiment of the present invention, the following compound can be used as a hydrophobic compound capable of copolymerizing with the polymerizable carbosiloxane dendron represented by the general formula (1): linear, branched, or cyclic alkyl (meth)acrylates such as methyl (meth)acrylate, ethyl (meth)acrylate, propyl (meth)acrylate, i-propyl (meth)acrylate, n-butyl (meth)acrylate, i-butyl (meth)acrylate, t-butyl (meth)acrylate, 2-ethylhexyl (meth)acrylate, cyclohexyl (meth)acrylate, methoxydiethylene glycol (meth)acrylate, ethoxydiethylene glycol (meth)acrylate, phenyl (meth)acrylate, phenoxyethyl (meth)acrylate, benzyl (meth)acrylate, isobonyl (meth)acrylate, or the like. The compound may be added either individually or in combination of two or more of those listed above as needed according to desired physical properties.

The amount of the hydrophobic compound capable of copolymerizing with the polymerizable carbosiloxane dendron represented by the general formula (1) added is not particularly limited, but is, for example, 0% by mass to 30% by mass, preferably 0% by mass to 20% by mass relative to the total amount of the polymer compound. When the amount of hydrophobic compound capable of copolymerizing with the polymerizable carbosiloxane dendron represented by the general formula (1) added exceeds 30% by mass, the obtained polymer compound may be reduced in strength, shape stability, flexibility, and the like.

In order to impart heat resistance and/or mechanical properties to the polymer compound according to one embodiment of the present invention, the following compound can be used as constituent component: crosslinkable (meth)acrylate compounds such as ethylene glycol di(meth)acrylate, diethylene glycol di(meth)acrylate, triethylene glycol di(meth)acrylate, propylene glycol di(meth)acrylate, dipropylene glycol di(meth)acrylate, trimethylolpropane tri(meth)acrylate, and pentaerythritol tri(meth)acrylate, allyl methacrylate, diallyl maleate, diallyl fumarate, diallyl succinate, diallyl phthalate, triallyl cyanurate, triallyl isocyanurate, diethylene glycol bisallyl carbonate, triallyl phosphate, triallyl trimellitate, diallyl ether, N,N-diallyl melamine, crosslinkable vinyl compounds such as divinylbenzene, or the like. The compound may be added either individually or in combination of two or more of those listed above as needed according to the desired physical properties.

The amount of the crosslinkable compound added is not particularly limited, but is, for example, 0.01% by mass to 10% by mass, preferably 0.05% by mass to 3% by mass relative to the total amount of the polymer compound. When the amount of the crosslinkable compound added exceeds 10% by mass, the obtained polymer compound may be reduced in flexibility and other properties.

The polymer compound according to one embodiment of the present invention can be produced by combining processes known by those skilled in the art, and the production method is not particularly limited, but may include, for example, the following steps (1) to (3):
(1) adding a polymerization initiator to a mixture of monomer compounds including as constituent component: a polymerizable carbosiloxane dendron represented by the general formula (1), a hydrophilic compound capable of copolymerizing with the polymerizable carbosiloxane dendron represented by the general formula (1), a hydrophobic compound capable of copolymerizing with the polymerizable carbosiloxane dendron represented by the general formula (1), a crosslinkable compound, and the like, and stirring and dissolving the mixture to obtain a monomer mixture;
(2) placing the obtained monomer mixture into an intended mold, and subjecting the mixture to a copolymerization reaction to obtain a copolymer;
(3) cooling and removing the copolymer from the mold, then cutting and polishing if necessary, and subsequently hydrating and swelling the molded copolymer to obtain a polymer compound (hydrogel).

Examples of the polymerization initiator include peroxide-based polymerization initiators such as lauroyl peroxide, cumene hydroperoxide, and benzoyl peroxide; and azo-based polymerization initiators such as azobisdimethylvaleronitrile and azobisisobutyronitrile (AIBN), which are common radical polymerization initiators. The polymerization initiator may be used either individually or in a combination of two or more of those listed above. The amount of the polymerization initiator added is not particularly limited as long as it is sufficient to promote the copolymerization reaction of the monomers. For example, it is preferably 10 ppm to 7000 ppm relative to the total amount of monomeric polymerizable components.

The step of obtaining the copolymer may be carried out by placing the monomer mixture into a mold made of metal, glass, plastic, etc., sealing the mold, and raising the temperature in the range of 25°C to 120°C in stepwise or continuously in a constant-temperature chamber or other apparatus for 5 hours to 120 hours to complete polymerization. For the polymerization, ultraviolet rays, electron beams, gamma rays, or the like can be used. Solution polymerization by adding water or an organic solvent to the monomer mixture may also be employed.

In the step of obtaining the polymer compound, after completion of the polymerization, the polymer is cooled to room temperature and removed from the mold, then cut and polished if necessary, and subsequently hydrated and swollen to form a hydrogel. Examples of the liquid (swelling solution) used include water, saline, and an isotonic buffer solution. In order to make the copolymer swollen, the copolymer is immersed in the swelling solution heated to a temperature in the range of 60 °C to 100°C for a certain period of time. During this swelling process, it is also preferable to remove unpolymerized monomers contained in the polymer.

The present invention will now be described in further detail with reference to Examples, which are not intended to limit the present invention. The present invention may take various embodiments to the extent that the objectives of the present invention are achieved.

### Examples

### [Synthesis of Polymerizable Carbosiloxane Dendron Having a Dicarbonyl Residue in the Linker (Two-Branched Structure)]

### Example 1. Synthesis of Polymerizable Carbosiloxane Dendron (1-1)

### 1-1. Summary

Polymerizable carbosiloxane dendron having a dicarbonyl residue in the linker (1-1) was synthesized according to the following synthetic scheme (I).

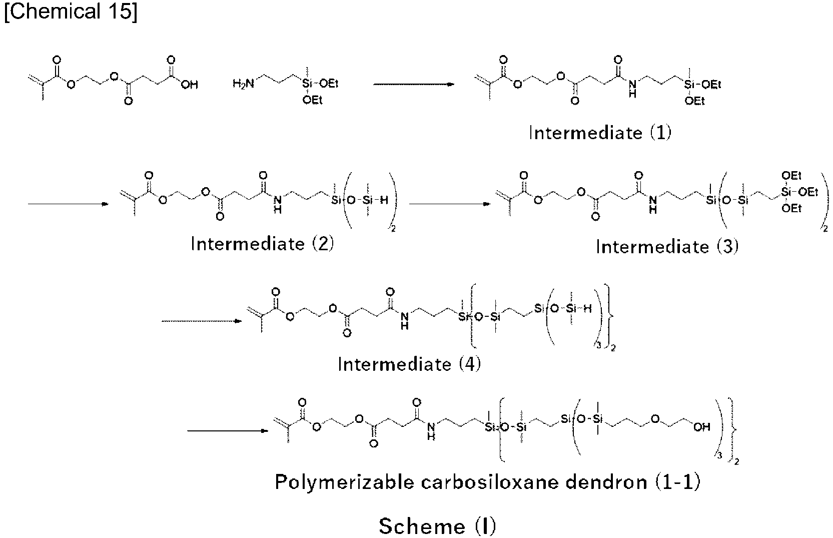

### 1-2. Synthesis of Intermediate (1)

A mixture of 15.00 g of 3-aminopropyl diethoxymethylsilane, 18.00 g of methacryloyloxyethyl succinate, 0.96 g of 4-dimethylaminopyridine, 15 g of 1-(3-dimethylaminopropyl)-3-ethylcarbodiimide hydrochloride, and 60 mL of super dehydrated dichloromethane was stirred for 24 hours at room temperature under an argon atmosphere. After washing with saturated aqueous sodium bicarbonate solution and saturated brine, the solution was purified by silica gel column chromatography to obtain 23.49 g of intermediate (1), a clear liquid.

The NMR spectrum of the obtained intermediate (1) was as follows.
¹H-NMR (500 MHz, CDCl₃) δppm: 6.13 (s, 1H), 5.60 (s, 1H), 4.35 (s, 4H), 3.76 (q, 4H), 3.23 (q, 2H), 2.70 (t, 2H), 2.47 (t, 2H), 1.95 (s, 3H), 1.58 (m, 2H), 1.22 (t, 6H), 0.61 (t, 2H), 0.21 (s, 3H)
²⁹Si-NMR (500 MHz, CDCl₃) δppm: -5.09

### 1-3. Synthesis of Intermediate (2)

To a mixture of 53.6 g of 1,1,3,3-trimethyldisiloxane, 0.98 g of para-toluenesulfonic acid, and 3.24 mL of water, 23 g of intermediate (1) was added dropwise over 30 minutes. After the dropwise addition was completed, the mixture was further stirred for 4 hours at room temperature. The reaction solution was transferred to a separating funnel, washed with pure water and saturated brine, and then purified by silica gel chromatography to obtain 7.82 g of intermediate (2), a clear liquid.

The NMR spectrum of the obtained intermediate (2) was as follows.
¹H-NMR (500 MHz, CDCl₃) δppm: 6.13 (s, 1H), 5.60 (s, 1H), 4.70 (m, 2H), 4.34 (s, 4H), 3.22 (q, 2H), 2.70 (t, 2H), 2.47 (t, 2H), 1.95 (s, 3H), 1.52 (m, 2H), 0.50 (t, 3H), 0.19 (d, 12H), 0.06 (s, 3H)
²⁹Si-NMR (500 MHz, CDCl₃) δppm: -6.19, -19.06

### 1-4. Synthesis of Intermediate (3)

A mixture of 16.05 g of triethoxyvinylsilane, 1.5 mL of a 0.2% solution of platinum (0)-1,3-divinyltetramethyldisiloxane in tetrahydrofuran, and 10 mL of super dehydrated tetrahydrofuran was warmed to 60°C with stirring under an argon atmosphere. To the obtained solution, a mixture of 7.82 g of intermediate (2) and 10 mL of super dehydrated tetrahydrofuran was added dropwise over 30 minutes. After the dropwise addition was completed, the reaction solution was further stirred at 60°C for 4 hours. After concentrating the reaction solution under reduced pressure, the residue was purified by silica gel chromatography to obtain 11.17 g of intermediate (3), a clear colorless liquid.

The NMR spectrum of the obtained intermediate (3) was as follows.
¹H-NMR (500 MHz, CDCl₃) δppm: 6.13 (s, 1H), 5.60 (s, 1H), 4.35 (s, 4H), 3.82 (q, 12H), 3.21 (q, 2H), 2.70 (t, 2H), 2.47 (t, 2H), 1.95 (s, 3H), 1.50 (m, 2H)1.23 (t, 18H), 0.55 (s, 6H), 0.45 (m, 2H), 0.07 (s, 12H), 0.02 (s, 3H)
²⁹Si-NMR (500 MHz, CDCl₃) δppm: 8.40, -22.28, -44.72

### 1-5. Synthesis of Intermediate (4)

To a mixture of 20.0 g of 1,1,3,3-trimethyldisiloxane, 0.23 g of para-toluenesulfonic acid, and 2.30 mL of water, 11.5 g of intermediate (3) was added dropwise over 30 minutes. After the dropwise addition was completed, the mixture was further stirred for 4 hours at room temperature. The reaction solution was transferred to a separating funnel, washed with pure water and saturated brine, and then purified by silica gel chromatography to obtain 8.60 g of intermediate (4), a clear liquid.

The NMR spectrum of the obtained intermediate (4) was as follows.
¹H-NMR (500 MHz, CDCl₃) δppm: 6.13 (s, 1H), 5.59 (s, 1H), 4.72 (m, 5H), 4.34 (s, 4H), 3.21 (q, 2H), 2.70 (t, 2H), 2.46 (t, 2H), 1.95 (s, 3H), 1.50 (m, 2H), 0.46 (m, 9H), 0.20 (d,30H), 0.07 (s, 12H), 0.02 (s, 3H)
²⁹Si-NMR (500 MHz, CDCl₃) δppm: 8.52, -5.95, -22.39, -62.54

### 1-6. Synthesis of Polymerizable Carbosiloxane Dendron (1-1)

A mixture of 4.78 g ethylene glycol monoallyl ether, 0.80 mL of a 0.2% solution of platinum (0)-1,3-divinyltetramethyldisiloxane in tetrahydrofuran and 5.40 mL of super dehydrated tetrahydrofuran was warmed to 60°C with stirring under an argon atmosphere. To the obtained solution, a mixture of 4.00 g of intermediate (4) and 5.40 mL of super dehydrated tetrahydrofuran was added dropwise over 30 minutes. After the dropwise addition was completed, the reaction solution was further stirred at 60°C for 4 hours. After concentrating the reaction solution under reduced pressure, the residue was purified by silica gel chromatography to obtain 4.10 g of polymerizable carbosiloxane dendron (1-1), a clear colorless liquid.

The NMR spectrum of the obtained polymerizable carbosiloxane dendron (1-1) was as follows.
¹H-NMR (500 MHz, CDCl₃) δppm: 6.13 (s, 1H), 5.60 (s, 1H), 4.34 (s, 4H), 3.72 (t, 12H), 3.54 (t, 12H), 3.44 (t, 12H), 3.19 (q, 2H), 2.69 (t, 2H), 2.46 (t, 2H), 1.95 (s, 3H), 1.63 (m, 12H), 1.49 (m, 2H), 0.55 (m, 12H), 0.46 (m, 7H), 0.33 (m, 2H), 0.10 (s, 48H), 0.02 (s, 3H)
²⁹Si-NMR (500 MHz, CDCl₃) δppm: 8.43, 7.81, -22.27, -65.02

### Example 2. Synthesis of Polymerizable Carbosiloxane Dendron (1-2)

### 2-1. Summary

Polymerizable carbosiloxane dendron having a dicarbonyl residue in the linker (1-2) was synthesized according to the following synthetic scheme (II).

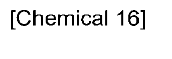

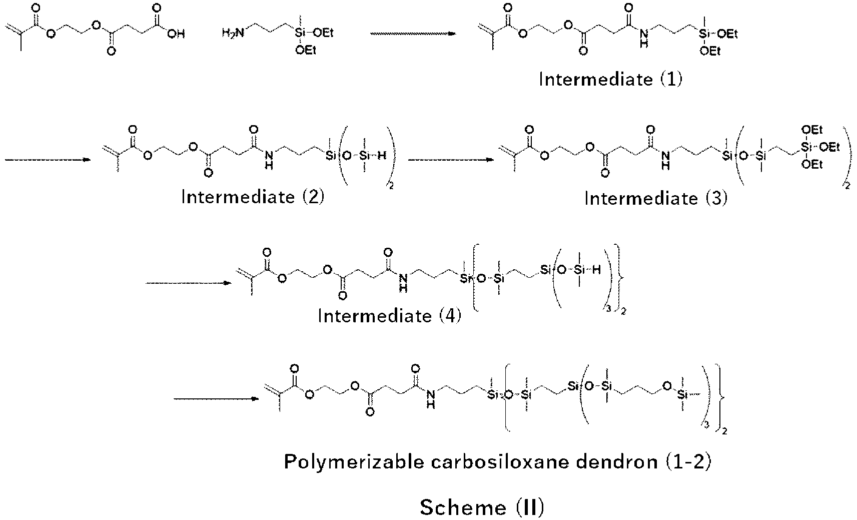

### 2-2. Synthesis of Intermediates (1) to (4)

Intermediates (1) to (4) were synthesized by the same synthetic method as that for intermediates (1) to (4) described in Synthesis of Polymerizable Carbosiloxane Dendron (1-1) above.

### 2-3. Synthesis of Polymerizable Carbosiloxane Dendron (1-2)

A mixture of 4.06 g of allyloxytriethylsilane, 0.80 mL of a 0.2% solution of platinum (0)-1,3-divinyltetramethyldisiloxane in tetrahydrofuran and 5.40 mL of super dehydrated tetrahydrofuran was warmed to 60°C with stirring under an argon atmosphere. To the obtained solution, a mixture of 4.00 g of intermediate (4) and 5.40 mL of super dehydrated tetrahydrofuran was added dropwise over 30 minutes. After the dropwise addition was completed, the reaction solution was further stirred at 60°C for 4 hours. After concentrating the reaction solution under reduced pressure, the residue was purified by silica gel chromatography to obtain 1.97 g of polymerizable carbosiloxane dendron (1-2), a clear colorless liquid.

The NMR spectrum of the obtained polymerizable carbosiloxane dendron (1-2) was as follows:
¹H-NMR (500 MHz, CDCl₃) δppm: 6.11 (s, 1H), 5.57 (s, 1H), 4.23 (s, 4H), 3.50 (t, 12H), 3.18 (q, 2H), 2.67 (t,2H), 2,43 (t, 2H), 1.92 (s, 3H), 1.52 (m, 14H), 0.55 (m, 12H), 0.43 (m, 8H), 0.30 (m, 2H), 0.09 (d,102H), 0.04 (s, 3H)
²⁹Si-NMR (500 MHz, CDCl₃) δppm: 16.86, 6.64, 7.89, -22.45, -65.03

### [Formation of Hydrogel Containing Polymerizable Carbosiloxane Dendron Having a Dicarbonyl Residue in the Linker (Two-Branched Structure)]

### Example 3. Formation of Hydrogel 1

According to Table 1, 50 parts by mass of polymerizable carbosiloxane dendron (1-1), 49 parts by mass of hydroxyethyl methacrylate, 1 part by mass of ethylene glycol dimethacrylate, and 3000 ppm of AIBN were weighed, and then stirred for 30 minutes at room temperature while performing nitrogen substitution. After stirring, the monomer mixture was placed into a mold, and the temperature was increased in the range of 25°C to120°C for 24 hours to obtain a polymer. The polymer removed from the mold was swollen with a 50% ethanol solution at about 70°C, and then immersed in saline at 25°C for about one hour to obtain hydrogel 1.

### Example 4. Formation of Hydrogel 2

According to Table 1, 65 parts by mass of polymerizable carbosiloxane dendron (1-1), 13 parts by mass of dimethylacrylamide, 13 parts by mass of N-vinylpyrrolidone, 3.55 parts by mass of 2-hydroxybutyl methacrylate, 5 parts by mass of lauryl acrylate, 0.45 parts by mass of ethylene glycol dimethacrylate, and 3000 ppm of AIBN were weighed, and then stirred for 30 minutes at room temperature while performing nitrogen substitution. After stirring, the monomer mixture was placed into a mold, and the temperature was increased in the range of 25°C to120°C for 24 hours to obtain a polymer. The polymer removed from the mold was swollen with a 50% ethanol solution at about 70°C, and then immersed in saline at 25°C for about one hour to obtain hydrogel 2.

### Example 5. Formation of Hydrogel 3

According to Table 1, 65 parts by mass of polymerizable carbosiloxane dendron (1-2), 13 parts by mass of dimethylacrylamide, 13 parts by mass of N-vinylpyrrolidone, 3.55 parts by mass of 2-hydroxybutyl methacrylate, 5 parts by mass of lauryl acrylate, 0.45 parts by mass of ethylene glycol dimethacrylate, and 3000 ppm of AIBN were weighed, and then stirred for 30 minutes at room temperature while performing nitrogen substitution. After stirring, the monomer mixture was placed into a mold, and the temperature was increased in the range of 25°C to120°C for 24 hours to obtain a polymer. The polymer removed from the mold was swollen with a 50% ethanol solution at about 70°C, and then immersed in saline at 25°C for about one hour to obtain hydrogel 3.

### [Synthesis of Polymerizable Carbosiloxane Dendron Having a Dicarbonyl Residue in the Linker (Three-Branched Structure)]

### Example 6. Synthesis of Polymerizable Carbosiloxane Dendron (1-3)

### 6-1. Summary

Polymerizable carbosiloxane dendron having a dicarbonyl residue in the linker (1-3) was synthesized according to the following synthetic scheme (III).

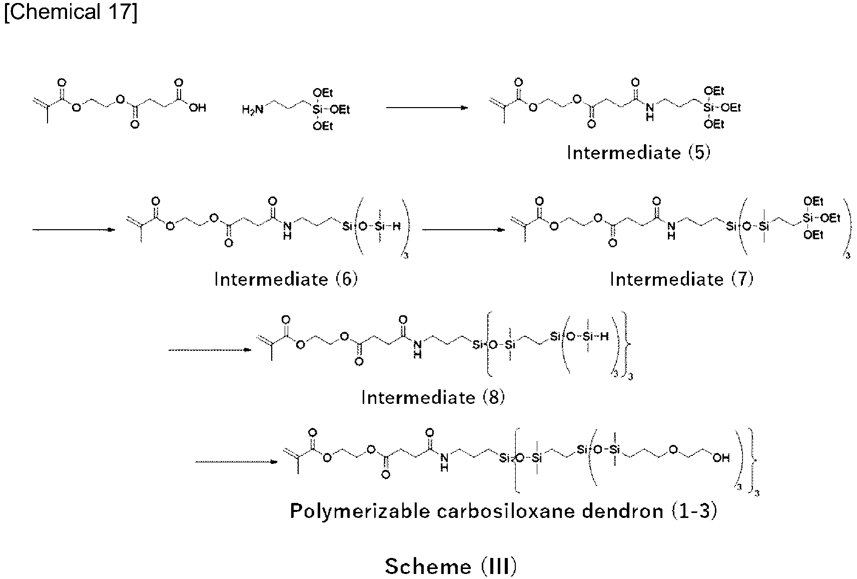

### 6-2. Synthesis of Intermediate (5)

A mixture of 8.80 g of 3-aminopropyltriethoxysilane, 9.10 g of methacryloyloxyethyl succinate, 0.48 g of 4-dimethylaminopyridine, 7.58 g of 1-(3-dimethylaminopropyl)-3-ethylcarbodiimide hydrochloride and 18 mL of super dehydrated dichloromethane was stirred for 24 hours at room temperature under an argon atmosphere. After washing with saturated aqueous sodium bicarbonate solution and saturated brine, the solution was purified by silica gel column chromatography to obtain 14.30 g of intermediate (5), a clear liquid.

The NMR spectrum of the obtained intermediate (5) was as follows.
¹H-NMR (500 MHz, CDCl₃) δppm: 6.13 (s, 1H), 5.60 (s, 1H), 4.34 (s, 4H), 3.82 (q, 4H), 3.24 (q, 2H), 2.70 (t, 2H), 2.46 (t, 2H), 1.95 (s, 3H), 1.62 (m, 2H), 1.23 (t, 9H), 0.63 (t, 2H)
²⁹Si-NMR (500 MHz, CDCl₃) δppm: -45.61

### 6-3. Synthesis of Intermediate (6)

To a mixture of 19.80 g of 1,1,3,3-trimethyldisiloxane, 0.48 g of para-toluenesulfonic acid and 1.13 mL of water, 8.00 g of intermediate (5) was added dropwise over 30 minutes. After the dropwise addition was completed, the mixture was further stirred at room temperature for 4 hours. The reaction solution was transferred to a separating funnel, washed with pure water and saturated brine, and then purified by silica gel chromatography to obtain 6.04 g of intermediate (6), a clear liquid.

The NMR spectrum of the obtained intermediate (6) was as follows.
¹H-NMR (500 MHz, CDCl₃) δppm: 6.10 (s, 1H), 5.57 (s, 1H), 4.68 (s, 3H), 4.32 (s, 4H), 3.19 (t, 2H), 2.67 (t, 2H), 2.44 (t, 2H), 1.92 (s, 3H), 1.51 (m, 2H), 0.49(q, 2H), 0.18 (s, 18H)
²⁹Si-NMR (500 MHz, CDCl₃) δppm: -5.44, -66.22

### 6-4. Synthesis of Intermediate (7)

A mixture of 8.30 g of triethoxyvinylsilane, 0.7 mL of a 0.2% solution of platinum (0)-1,3-divinyltetramethyldisiloxane in tetrahydrofuran and 5.80 mL of super dehydrated tetrahydrofuran was warmed to 60°C with stirring under an argon atmosphere. To the obtained solution, a mixture of 4.60 g of intermediate (6) and 5.8 mL of super dehydrated tetrahydrofuran was added dropwise over 30 minutes. After the dropwise addition was completed, the reaction solution was further stirred at 60°C for 4 hours. After concentrating the reaction solution under reduced pressure, the residue was purified by silica gel chromatography to obtain 4.60 g of intermediate (7), a clear colorless liquid.

The NMR spectrum of the obtained intermediate (7) was as follows.
¹H-NMR (500 MHz, CDCl₃) δppm: 6.13 (s, 1H), 5.60 (s, 1H), 4.34 (s, 4H), 3.81 (m, 18H), 3.21 (q, 2H), 2.70 (t, 2H), 2.47 (t, 2H), 1.95 (s, 3H), 1.52 (m, 2H), 1.23 (t, 27H), 0.56 (m, 10H), 0.45 (m, 2H), 0.08 (s, 18H)
²⁹Si-NMR (500 MHz, CDCl₃) δppm: 8.82, -44.47, -66.29

### 6-5. Synthesis of Intermediate (8)

To a mixture of 6.77 g of 1,1,3,3-trimethyldisiloxane, 0.11 g of para-toluenesulfonic acid, and 0.92 mL of water, 4.60 g of intermediate (7) was added dropwise over 30 minutes. After the dropwise addition was completed, the mixture was further stirred at room temperature for 4 hours. The reaction solution was transferred to a separating funnel, washed with pure water and saturated brine, and then purified by silica gel chromatography to obtain 4.10 g of intermediate (8), a clear liquid.

The NMR spectrum of the obtained intermediate (8) was as follows.
¹H-NMR (500 MHz, CDCl₃) δppm: 6.13 (s, 1H), 5.59 (s, 1H), 4.27 (m, 7H), 4.34 (s, 4H), 3.21 (m, 2H), 2.70 (t, 2H), 2.45 (t, 2H), 1.95 (s, 3H), 1.52 (m, 2H), 0.48 (m, 14H), 0.20 (d,48H), 0.08 (s, 18H)
²⁹Si-NMR (500 MHz, CDCl₃) δppm: 8.85, -5.95, -62.55, -66.51

### 6-6. Synthesis of Polymerizable Carbosiloxane Dendron (1-3)

A mixture of 5.50 g ethylene glycol monoallyl ether, 0.80 mL of a 0.2% solution of platinum (0)-1,3-divinyltetramethyldisiloxane in tetrahydrofuran and 5.50 mL of super dehydrated tetrahydrofuran was warmed to 60°C with stirring under an argon atmosphere. To the obtained solution, a mixture of 4.10 g of intermediate (8) and 5.50 mL of super dehydrated tetrahydrofuran was added dropwise over 30 minutes. After the dropwise addition was completed, the reaction solution was further stirred at 60°C for 4 hours. After concentrating the reaction solution under reduced pressure, the residue was purified by silica gel chromatography to obtain 1.50 g of polymerizable carbosiloxane dendron (1-3), a clear colorless liquid.

The NMR spectrum of the obtained polymerizable carbosiloxane dendron (1-3) was as follows.
¹H-NMR (500 MHz, CDCl₃) δppm: 6.13 (s, 1H), 5.60 (s, 1H), 4.34 (s, 4H), 3.72 (t, 18H), 3.54 (t, 18H), 3.45 (t, 18H), 3.19 (m, 2H), 2.69 (t, 2H), 2.46 (t, 2H), 1.95 (s, 3H), 1.63 (m, 18H), 1.52 (m, 2H), 0.46 (m, 32H), 0.09 (s, 71H)
²⁹Si-NMR (500 MHz, CDCl₃) δppm: 7.82, -62.04, -65.03

### Example 7. Synthesis of Polymerizable Carbosiloxane Dendron (1-5)

### 7-1. Summary

Polymerizable carbosiloxane dendron having a dicarbonyl residue in the linker (1-5) was synthesized according to the following synthetic scheme (IV).

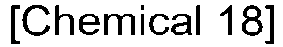

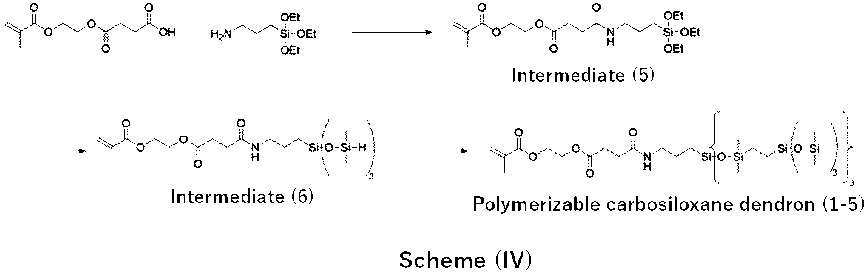

### 7-2. Synthesis of Intermediates (5) to (6)

Intermediates (5) to (6) were synthesized by the same synthetic method as that for intermediates (5) to (6) described in Synthesis of Polymerizable Carbosiloxane Dendron (1-3) above.

### 7-3. Synthesis of Polymerizable Carbosiloxane Dendron (1-5)

A mixture of 18.6 g of 1,1,1,5,5,5-hexamethyl-3-[(trimethylsilyl)oxy]-3-vinyltrisiloxane, 0.80 mL of a 0.2% solution of platinum (0)-1,3-divinyltetramethyldisiloxane in tetrahydrofuran, and 6.00 mL of super dehydrated tetrahydrofuran was warmed to 60°C with stirring under an argon atmosphere. To the obtained solution, a mixture of 6.04 g of intermediate (2) and 6.00 mL of super dehydrated tetrahydrofuran was added dropwise over 30 minutes. After the dropwise addition was completed, the reaction solution was further stirred at 60°C for 4 hours. After concentrating the reaction solution under reduced pressure, the residue was purified by silica gel chromatography to obtain 6.33 g of polymerizable carbosiloxane dendron (1-5), a clear colorless liquid.

The NMR spectrum of the obtained polymerizable carbosiloxane dendron (1-5) was as follows.
¹H-NMR (500 MHz, CDCl₃) δppm: 6.12 (s, 1H), 5.58 (s, 1H), 4.33 (s, 4H), 3.20 (q, 2H), 2.69 (t, 2H), 2.44 (t, 2H), 1.94 (s, 3H), 1.50 (m, 2H), 1.25 (m, 2H), 0.45 (m, 10H), 0.34 (m, 7H), 0.09 (s, 118H)
²⁹Si-NMR (500 MHz, CDCl₃) δppm: 8.84, 7.20, -64.81, -66.52

### [Formation of Hydrogel Containing Polymerizable Carbosiloxane Dendron Having a Dicarbonyl Residue in the Linker (Three-Branched Structure)]

### Example 8. Formation of Hydrogel 4

According to Table 1, 50 parts by mass of polymerizable carbosiloxane dendron (1-3), 49 parts by mass of hydroxyethyl methacrylate, 1 part by mass of ethylene glycol dimethacrylate, and 3000 ppm of AIBN were weighed, and then stirred for 30 minutes at room temperature while performing nitrogen substitution. After stirring, the monomer mixture was placed into a mold, and the temperature was increased in the range of 25°C to120°C for 24 hours to obtain a polymer. The polymer removed from the mold was swollen with a 50% ethanol solution at about 70°C, and then immersed in saline at 25°C for about one hour to obtain hydrogel 4.

### Example 9. Formation of Hydrogel 5

According to Table 1, 65 parts by mass of polymerizable carbosiloxane dendron (1-3), 13 parts by mass of dimethylacrylamide, 13 parts by mass of N-vinylpyrrolidone, 3.55 parts by mass of 2-hydroxybutyl methacrylate, 5 parts by mass of lauryl acrylate, 0.45 parts by mass of ethylene glycol dimethacrylate, and 3000 ppm of AIBN were weighed, and then stirred for 30 minutes at room temperature while performing nitrogen substitution. After stirring, the monomer mixture was placed into a mold, and the temperature was increased in the range of 25°C to120°C for 24 hours to obtain a polymer. The polymer removed from the mold was swollen with a 50% ethanol solution at about 70°C, and then immersed in saline at 25°C for about one hour to obtain hydrogel 5.

### Example 10. Formation of Hydrogel 6

According to Table 1, 62.81 parts by mass of polymerizable carbosiloxane dendron (1-3), 21.56 parts by mass of dimethylacrylamide, 13.74 parts by mass of N-vinylpyrrolidone, 1.26 parts by mass of methacrylic acid, 0.63 parts by mass of triethylene glycol dimethacrylate, and 7000 ppm of AIBN were weighed, and then stirred for 30 minutes at room temperature while performing nitrogen substitution. After stirring, the monomer mixture was placed into a mold, and the temperature was increased in the range of 25°C to120°C for 24 hours to obtain a polymer. The polymer removed from the mold was swollen with a 50% ethanol solution at about 70°C, and then immersed in saline at 25°C for about one hour to obtain hydrogel 6.

### Example 11. Formation of Hydrogel 7

According to Table 1, 62.81 parts by mass of polymerizable carbosiloxane dendron (1-5), 21.56 parts by mass of dimethylacrylamide, 13.74 parts by mass of N-vinylpyrrolidone, 1.26 parts by mass of methacrylic acid, 0.63 parts by mass of triethylene glycol dimethacrylate, and 7000 ppm of AIBN were weighed, and then stirred for 30 minutes at room temperature while performing nitrogen substitution. After stirring, the monomer mixture was placed into a mold, and the temperature was increased in the range of 25°C to120°C for 24 hours to obtain a polymer. The polymer removed from the mold was swollen with a 50% ethanol solution at about 70°C, and then immersed in saline at 25°C for about one hour to obtain hydrogel 7.

### [Synthesis of Polymerizable Carbosiloxane Dendron without a Dicarbonyl Residue in the Linker]

### Comparative Example 1. Synthesis of Polymerizable Carbosiloxane Dendron (X)

### 1-1. Summary

Polymerizable carbosiloxane dendron without a dicarbonyl residue in the linker (X) represented by the following formula was synthesized according to the following synthetic scheme (V).

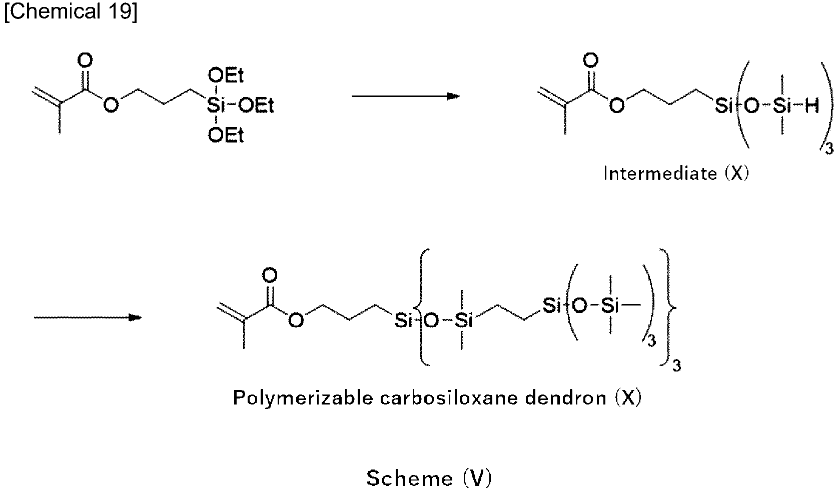

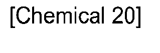

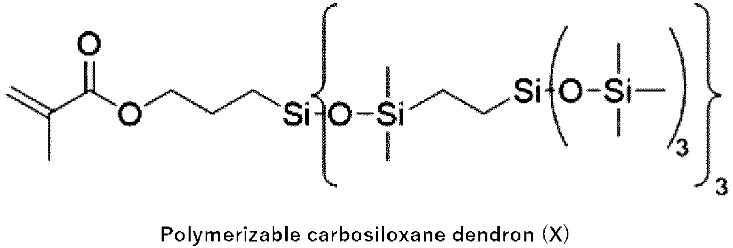

### 1-2. Synthesis of Intermediate (X)

To a mixture of 5.5 g of 1,1,3,3-trimethyldisiloxane, 0.18 g of para-toluenesulfonic acid, and 0.90 mL of water, 3.0 g of 3-(triethoxysilyl)propyl methacrylate was added dropwise over 30 minutes. After the dropwise addition was completed, the mixture was further stirred at room temperature for 4 hours. The reaction solution was transferred to a separating funnel, washed with pure water and saturated brine, and then purified by silica gel chromatography to obtain 3.46 g of intermediate (X), a clear liquid.

The NMR spectrum of the obtained intermediate (X) was as follows.
¹H-NMR (500 MHz, CDCl₃) δppm: 6.11 (s, 1H), 5.55 (s, 1H), 4.72 (m, 3H), 4.10 (t, 2H), 1.95 (s, 3H), 1.72 (m, 2H), 0.57 (m, 2H), 2.21 (d,18H)
²⁹Si-NMR (500 MHz, CDCl₃) δppm: -5.57, -63.89

### 1-3. Synthesis of Polymerizable Carbosiloxane Dendron (X)

A mixture of 7.30 g of 1,1,1,5,5,5-hexamethyl-3-[(trimethylsilyl)oxy]-3-vinyltrisiloxane, 0.5 mL of a 0.2% solution of platinum (0)-1,3-divinyltetramethyldisiloxane in tetrahydrofuran, and 2.4 mL of super dehydrated tetrahydrofuran was warmed to 60°C with stirring under an argon atmosphere. To the obtained solution, a mixture of 1.73 g of intermediate (X) and 2.4 mL of super dehydrated tetrahydrofuran was added dropwise over 30 minutes. After the dropwise addition was completed, the reaction solution was further stirred at 60°C for 4 hours. After concentrating the reaction solution under reduced pressure, the residue was purified by silica gel chromatography to obtain 4.22 g of polymerizable carbosiloxane dendron (X), a clear colorless liquid.

The NMR spectrum of the obtained polymerizable carbosiloxane dendron (X) was as follows.
¹H-NMR (500 MHz, CDCl₃) δppm: 6.09 (s, 1H), 5.53 (s, 1H), 4.06 (t, 2H), 1.94 (s, 3H), 1.71 (m, 2H), 0.49 (m, 8H), 0.34 (m, 6H), 0.09 (s, 99H)
²⁹Si-NMR (500 MHz, CDCl₃) δppm: 8.73, 7.15, -64.79, -66.48

### [Formation of Hydrogel Containing Polymerizable Carbosiloxane Dendron without a Dicarbonyl Residue in the Linker]

### Comparative Example 2. Formation of Hydrogel

In the same manner as in Example 3, 49 parts by mass of hydroxyethyl methacrylate, 1 part by mass of ethylene glycol dimethacrylate, and 3000 ppm of AIBN were used, except that polymerizable carbosiloxane dendron (X) was used instead of polymerizable carbosiloxane dendron (1-1), and the mixture was stirred.

### Comparative Example 3. Formation of Hydrogel

In the same manner as in Example 4, 13 parts by mass of dimethylacrylamide, 13 parts by mass of N-vinylpyrrolidone, 3.55 parts by mass of 2-hydroxybutyl methacrylate, 5 parts by mass of lauryl acrylate, 0.45 parts by mass of ethylene glycol dimethacrylate, and 3000 ppm of AIBN were used, except that polymerizable carbosiloxane dendron (X) was used instead of polymerizable carbosiloxane dendron (1-1), and the mixture was stirred.

### [Evaluation]

The compatibility of the monomer mixtures of Examples 3 to 5, 8 to 11 and Comparative Examples 2 to 3, and the appearance (transparency) of the obtained hydrogels were evaluated. The results are shown in Table 1.

**[Table 1]**

| | Example 3 | Example 4 | Example 5 | Example 8 | Example 9 | Example 10 | Example 11 | Comparative Example 2 | Comparative Example 3 |
|---|---|---|---|---|---|---|---|---|---|
| Polymerizable carbosiloxane dendron (1-1) | 50 | 65 | - | - | - | - | - | - | - |
| Polymerizable carbosiloxane dendron (1-2) | - | - | 65 | - | - | - | - | - | - |
| Polymerizable carbosiloxane dendron (1-3) | - | - | - | 50 | 65 | 62.81 | - | - | - |
| Polymerizable carbosiloxane dendron (1-5) | - | - | - | - | - | - | 62.81 | - | - |
| Polymerizable carbosiloxane dendron (X) | - | - | - | - | - | - | - | 50 | 65 |
| Hydroxyethyl methacrylate | 49 | - | - | 49 | - | - | - | 49 | - |
| Dimethylacrylamide | - | 13 | 13 | - | 13 | 21.56 | 21.56 | - | 13 |
| N-Vinylpyrrolidone | - | 13 | 13 | - | 13 | 13.74 | 13.74 | - | 13 |
| 2-Hydroxybutyl methacrylate | - | 3.55 | 3.55 | - | 3.55 | - | - | - | 3.55 |
| Lauryl acrylate | - | 5 | 5 | - | 5 | - | - | - | 5 |
| Methacrylic acid | - | - | - | - | - | 1.26 | 1.26 | - | - |
| Ethylene glycol dimethacrylate | 1 | 0.45 | 0.45 | 1 | 0.45 | - | - | 1 | 0.45 |
| Triethylene glycol dimethacrylate | - | - | - | - | - | 0.63 | 0.63 | - | - |
| AIBN | 3000 ppm | 3000 ppm | 3000 ppm | 3000 ppm | 3000 ppm | 7000 ppm | 7000 ppm | 3000 ppm | 3000 ppm |
| Monomer compatibility | Soluble | Soluble | Soluble | Soluble | Soluble | Soluble | Soluble | Insoluble | Insoluble |
| Hydrogel appearance | Transparent | Transparent | Transparent | Transparent | Transparent | Transparent | Transparent | - | - |

The results in Table 1 show that when using polymerizable carbosiloxane dendrons having a dicarbonyl residue in the linker (1-1), (1-2), (1-3), and (1-5) (Examples), the obtained monomer solutions were homogeneous, and transparent hydrogels could be formed. This suggested that polymerizable carbosiloxane dendron having a dicarbonyl residue in the linker has higher compatibility and copolymerizability with one or more other compounds capable of copolymerization, particularly hydrophilic compounds capable of copolymerization.

On the other hand, when using polymerizable carbosiloxane dendrons without a dicarbonyl residue in the linker (X) (Comparative Examples), the obtained monomer solutions were not homogeneous, and thus could not be subjected to a copolymerization reaction to form a hydrogel. This suggests that polymerizable carbosiloxane dendron without a dicarbonyl residue in the linker has poor compatibility and copolymerizability with one or more other compounds capable of copolymerization, particularly hydrophilic compounds capable of copolymerization.

### Industrial Applicability

The polymerizable carbosiloxane dendron according to one embodiment of the present invention, and a polymer compound containing the polymerizable carbosiloxane dendron as constituent component can be used as a raw material for hydrogels, medical devices, ophthalmic lenses, DDS devices, etc.

## Claims

1. A polymerizable carbosiloxane dendron, represented by the general formula (1): X-L-D (wherein, X is a (meth)acryloyloxyalkyl residue represented by the following general formula (2), 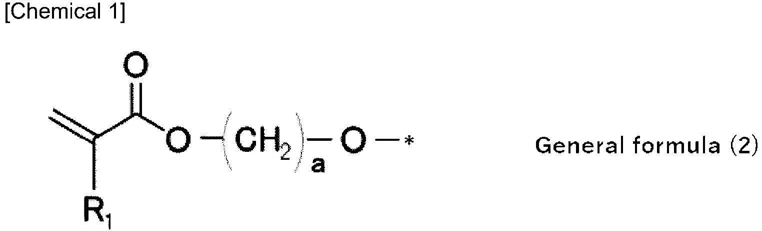
(wherein, R₁ represents a hydrogen atom or a methyl group, and the symbol "a" is an integer of 1 to 4, and the asterisk * is a bonding site between the general formula (2) and the following general formula (3))
L is a dicarbonyl residue represented by the following general formula (3), and 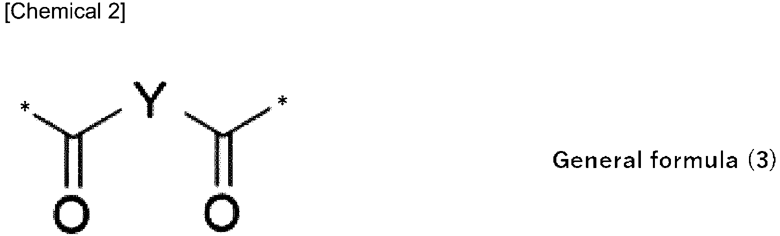
(wherein, Y represents an alkylene group having 1 to 8 carbons or a phenylene group, one of the asterisks * is a bonding site between the general formula (3) and the above general formula (2), and the other of the asterisks * is a bonding site between the general formula (3) and the following general formula (4) or the following general formula (7))
D is a carbosiloxane dendron represented by the following general formula (4), 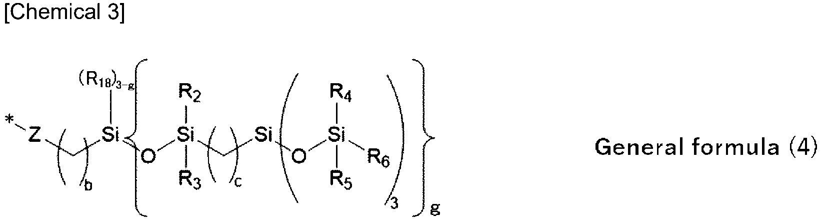
(wherein, Z represents O or NH, the symbol "b" is an integer of 1 to 5, the symbol "c" is an integer of 2 to 5, R₂ to R₅ each independently represents an alkyl group having 1 to 4 carbons, R₆ represents an alkyl group having 1 to 4 carbons, or an substituted alkyl group represented by the following general formula (5), the symbol "g" is an integer of 2 to 3, and R₁₈ represents a methyl group, and the asterisk * is a bonding site between the general formula (4) and the above general formula (3)) 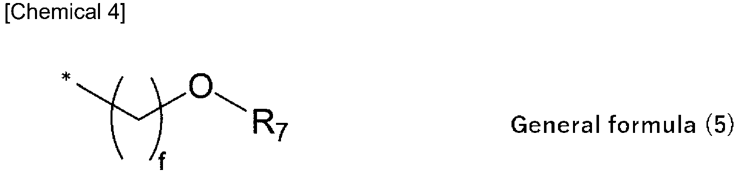
(wherein, the symbol "f" is an integer of 2 to 5, and R₇ represents a hydrogen atom, or an alkyl group or a hydroxyalkyl group with a linear or branched structure having 1 to 5 carbons, or a silyl group represented by the following general formula (6), and the asterisk * is a bonding site between the general formula (5) and the above general formula (4)) 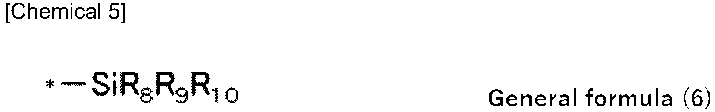
(wherein, R₈ to R₁₀ each independently represents a hydrogen atom or an alkyl group having 1 to 3 carbons, and the asterisk * is a bonding site between the general formula (6) and the above general formula (5)), or
D is a carbosiloxane dendron represented by the following general formula (7) 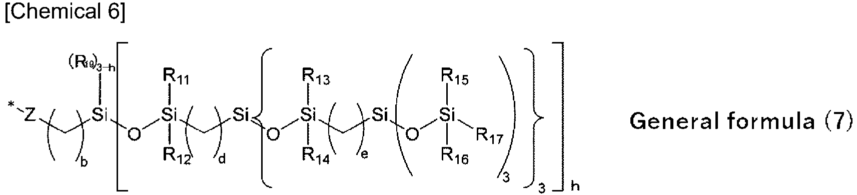
(wherein, Z represents O or NH, the symbol "b" is an integer of 1 to 5, the symbols "d" and "e" each is independently an integer of 2 to 5, R₁₁ to R₁₆ each independently represents an alkyl group having 1 to 4 carbons, R₁₇ represents an alkyl group having 1 to 4 carbons, or a substituted alkyl group represented by the above general formula (5), the symbol "h" is an integer of 2 to 3, and R₁₉ represents a methyl group, and the asterisk * is a bonding site between the general formula (7) and the above general formula (3))).

2. The polymerizable carbosiloxane dendron according to claim 1, wherein in the general formula (2), R₁ is methyl group, and the symbol "a" is an integer of 2.

3. The polymerizable carbosiloxane dendron according to claim 1, wherein in the general formula (3), Y is an alkylene group having 2 carbons.

4. The polymerizable carbosiloxane dendron according to claim 1, wherein in the general formula (4), R₂ to R₅ each is methyl group.

5. The polymerizable carbosiloxane dendron according to claim 4, wherein in the general formula (4), R₆ is methyl group or ethyl group.

6. The polymerizable carbosiloxane dendron of claim 4, wherein in the general formula (4), the symbol "b" is an integer of 3, the symbol "c" is an integer of 2, and the symbol "g" is an integer of 2 to 3.

7. The polymerizable carbosiloxane dendron according to claim 1, wherein in the general formula (7), R₁₁ to R₁₆ each is methyl group.

8. The polymerizable carbosiloxane dendron according to claim 7, wherein in the general formula (7), R₁₇ is methyl group or ethyl group.

9. The polymerizable carbosiloxane dendron according to claim 7, wherein in the general formula (7), the symbol "b" is an integer of 3, the symbol "d" is an integer of 2, the symbol "e" is an integer of 3, and the symbol "h" is an integer of 2 to 3.

10. The polymerizable carbosiloxane dendron according to claim 1, wherein in the general formula (6), R₈ to R₁₀ each is methyl group or ethyl group.

11. The polymerizable carbosiloxane dendron according to claim 1, wherein the polymerizable carbosiloxane dendron is represented by any one of the following formulas:

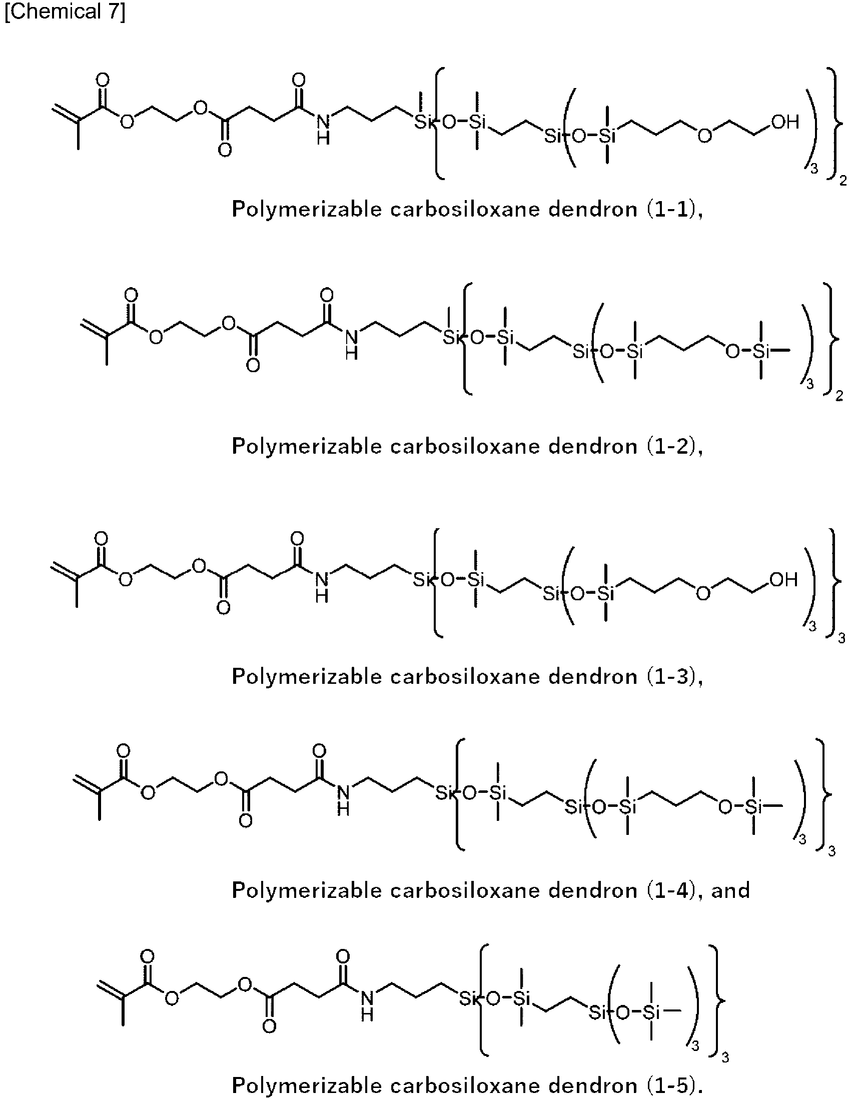

12. A polymer compound, containing as constituent components: a polymerizable carbosiloxane dendron according to any one of claims 1 to 11, and a compound capable of copolymerizing with the polymerizable carbosiloxane dendron.

13. The polymer compound according to claim 12, wherein the compound capable of copolymerizing with the polymerizable carbosiloxane dendron is a hydrophilic compound capable of copolymerizing with at least one polymerizable carbosiloxane dendron.
